# EUROPEAN PATENT APPLICATION

(11) **EP 4 160 562 A1**
(43) Date of publication of application: **05.04.2023**
(21) Application number: 22183036.7
(22) Date of filing: 05.07.2022
(51) Int. Cl.: G08B 17/00, G08B 25/08

(54) **METHOD FOR INTELLIGENT DISASTER AND SAFETY MANAGEMENT INTERWORKING WITH ARTIFICIAL INTELLIGENCE, AND SYSTEM FOR PERFORMING METHOD**

(30) Priority: 29.09.2021 KR 20210128771
(71) Applicant: Schaffengott Co.,Ltd., Busan 48060 (KR)
(72) Inventor: KWON, Ik Hwan, 46773 Busan (KR)
(74) Representative: AWA Sweden AB

(57) **Abstract**

A method for intelligent disaster and safety management interworking with artificial intelligence, and a system for performing the method are proposed. The method for the intelligent disaster and safety management interworking with artificial intelligence may include: generating, by a detector, a plurality of pieces of detection information; transmitting, by a communication part, the plurality of pieces of detection information to a control server; receiving, by the communication part, control information from the control server; and controlling, by a controller, an output part according to whether a fire (or an urgent situation) has occurred on the basis of the control information (on firefighting, crime, and emergency).

## Description

### CROSS REFERENCE TO RELATED APPLICATION

The present application claims priority to Korean Patent Application No. 10-2021-0128771, filed September 29, 2021, the entire contents of which is incorporated herein for all purposes by this reference.

### BACKGROUND OF THE INVENTION

### Field of the Invention

The present disclosure relates to a method for intelligent disaster and safety management interworking with artificial intelligence, and a system for performing the method. More particularly, the present disclosure relates to a method for intelligent disaster and safety management interworking with artificial intelligence, and a system for performing the method, wherein a site location may be easily identified in case of an emergency situation such as a crime or a fire, and the occurrence of the crime or fire is quickly detected and promptly disseminated to managers, persons concerned, and a control room, so as to minimize the damage due to the emergency situation.

### Description of the Related Art

More than 68% of people suffocate in smoke in case of a fire occurred in a home, public place, or building. In the event of a fire in a high-rise building, it is difficult to extinguish the fire due to the inaccessibility of helicopters and the limitation of a fire truck ladder that may access up to 18 floors.

In the case of conventional fire extinguishers, the fire extinguishers are often placed in inconspicuous positions due to unfavorable design thereof, so the fire extinguishers are not maintained and difficult to be used in case of an emergency. The conventional fire extinguishers become unusable due to hardening of solution inside the fire extinguishers when not shaken well at regular intervals (e.g., six months).

Specifically, the conventional fire extinguishers have a structure in which powder or gas is filled and sprayed by pressure. As such, the fire extinguishers should withstand pressure therein and include a pressure gauge to maintain the pressure. In this case, the structure to withstand the pressure uses a strong iron plate to bear the pressure, thereby making the weight of a fire extinguisher requisitely heavy. For this reason, when a fire occurs, a user has to go to a fire scene while carrying a fire extinguisher, thereby making a lot of time and stamina of the user to be already exhausted.

In addition to the problem with such fire extinguishers themselves, problems in which the entire process of recognition, alarm, notification, and extinction of fire is individualized in a current firefighting and disaster prevention system and equipment capable of solving matters is distributed in the respective processes are also criticized. Further, similar equipment is redundantly installed such that the firefighting and disaster prevention system is equipped with separate rescue systems to respond to crime damage, occurrences of emergency patients, and the like, thereby increasing the burden on management and costs.

### SUMMARY OF THE INVENTION

An objective of the present disclosure is to solve all of the above problems.

In addition, another objective of the present disclosure is to facilitate fire extinguisher management on a device of a manager in a firefighting facility to solve a problem due to omission or negligence of the fire extinguisher management.

In addition, yet another objective of the present disclosure is to implement a structure in which in case of a fire or an urgent situation (i.e., a crime or an emergency) and the like, a location where the scene occurs is easily identified, and the fire or the urgent situation (i.e., the crime or emergency) is quickly detected and promptly disseminated to people around, managers, persons concerned, and a control room, thereby minimizing a damage.

In addition, still another objective of the present disclosure is to provide an embodiment in which in addition to a fire, a rescue signal is transmitted in case of a crime, and also an emergency illumination device required in case of the fire, a strobe flash required for positioning, and the like are all built-in, so as to take measures to enable prompt responses in urgent situations such as the fire, crime, and emergency.

A representative configuration of the present disclosure for achieving the above objectives is as follows.

According to an exemplary embodiment of the present disclosure, a method for intelligent disaster and safety management interworking with artificial intelligence includes: generating, by a detector, a plurality of pieces of detection information; transmitting, by a communication part, the plurality of pieces of detection information as disaster management information to a control server; receiving, by the communication part, control information from the control server; and controlling, by a controller, an output part according to whether a fire has occurred or whether an urgent situation has occurred on the basis of the control information.

In addition, the detector may include a management detection part, a fire detection part, and an urgent situation detection part, the management detection part may include a cover detection part, a solution detection part, and a distance detection part or an illumination detection part, the fire detection part may include a heat detection part, a flame detection part, an image detection part, a smoke detection part, and a gas detection part, and the urgent situation detection part may include an image detection part and an urgent notification button part.

In addition, at least one piece of the detection information among the plurality of pieces of detection information may be set as a determination factor for determining whether a fire has occurred, the determination factor may be classified into one of a first determination factor group, a second determination factor group, and a third determination factor group, the first determination factor group may include the determination factor for determining that a fire has not occurred, the second determination factor group may include the determination factor for determining whether a fire has occurred on the basis of a fire determination artificial intelligence engine, and the third determination factor group may include the determination factor for determining that a fire has occurred.

A system for intelligent disaster and safety management interworking with artificial intelligence includes: a detector configured to generate a plurality of pieces of detection information; a communication part configured to transmit the plurality of pieces of detection information as disaster management information to a control server and receive control information from the control server; and a controller configured to control an output part according to whether a fire has occurred or an urgent situation has occurred on the basis of the control information.

Meanwhile, the detector may include a management detection part, a fire detection part, and an urgent situation detection part, the management detection part may include a cover detection part, a solution detection part, and a distance detection part or an illumination detection part, the fire detection part may include a heat detection part, a flame detection part, an image detection part, a smoke detection part, and a gas detection part, and the urgent situation detection part may include an image detection part and an urgent notification button part.

In addition, at least one piece of the detection information among the plurality of pieces of detection information may be set as a determination factor for determining whether a fire has occurred, the determination factor may be classified into one of a first determination factor group, a second determination factor group, and a third determination factor group, the first determination factor group may include the determination factor for determining that a fire has not occurred, the second determination factor group may include the determination factor for determining whether a fire has occurred on the basis of a fire determination artificial intelligence engine, and the third determination factor group may include the determination factor for determining that a fire has occurred.

According to the present disclosure, in a system for intelligent disaster and safety management interworking with artificial intelligence, the fire extinguisher management is made convenient, so the problem due to omission or negligence of maintenance for fire extinguishers may be solved, and also the occurrence of a fire situation or an urgent situation (i.e., crime or emergency) may be responded to quickly, so as to save life and property in the fire situation or the urgent situation (i.e., crime or emergency).

In addition, according to the present disclosure, the positions of fire extinguishers are easily identified in case of a fire, and the occurrence of the fire is quickly detected and promptly disseminated to the managers, persons concerned, and a control room, thereby minimizing a damage.

In addition, according to the present disclosure, compared to existing malfunctioning equipment, precision is improved through a plurality of pieces of various information, so that reliability of the system may be increased and the waste of administrative power due to the malfunction may be reduced.

### BRIEF DESCRIPTION OF THE DRAWINGS

FIG. 1 is a conceptual diagram illustrating a system for intelligent disaster and safety management interworking with artificial intelligence according to an exemplary embodiment of the present disclosure.
FIG. 2 is a conceptual diagram illustrating a detection operation of a detector of the system for intelligent disaster and safety management interworking with artificial intelligence according to the exemplary embodiment of the present disclosure.
FIG. 3 is a conceptual diagram illustrating the detection operation, which is based on artificial intelligence, of the detector according to the exemplary embodiment of the present disclosure.
FIG. 4 is a conceptual diagram illustrating a fire detection method according to the exemplary embodiment of the present disclosure.
FIG. 5 is a conceptual diagram illustrating a method of determining whether a fire has occurred on the basis of determination results of fire determination artificial intelligence engines according to the exemplary embodiment of the present disclosure.
FIG. 6 is a conceptual diagram illustrating a method of determining whether a fire has occurred on the basis of the determination results of the fire determination artificial intelligence engines according to the exemplary embodiment of the present disclosure.

### DETAILED DESCRIPTION OF THE INVENTION

In the detailed description of the present disclosure described below, reference is made to the accompanying drawings, which are shown by way of illustrating specific exemplary embodiments in which the present disclosure may be implemented. These exemplary embodiments are described in sufficient detail to enable those skilled in the art to implement the present disclosure. It should be understood that the various exemplary embodiments of the present disclosure are different, but are not necessarily mutually exclusive. For example, specific shapes, structures, and characteristics described herein may be implemented with changes from one exemplary embodiment to another without departing from the spirit and scope of the present disclosure.

In addition, it should be understood that the positions or arrangement of individual components within each exemplary embodiment may be changed without departing from the spirit and scope of the present disclosure. Accordingly, the following detailed description is not to be taken in a limiting sense, and the scope of the present disclosure should be taken to cover the scope claimed by each claim in the patent claims and all scopes equivalents thereto. Like reference numerals in the drawings refer to the same or similar components throughout the various aspects.

Hereinafter, in order to enable those skilled in the art to easily implement the present disclosure, various preferred exemplary embodiments of the present disclosure will be described in detail with reference to the accompanying drawings.

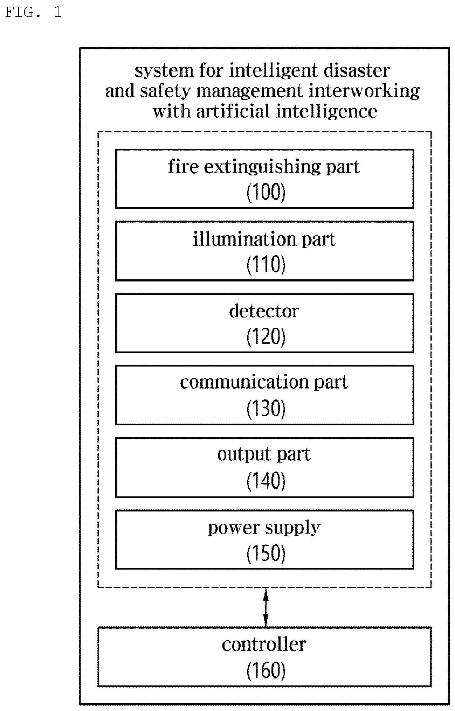

FIG. 1 is a conceptual diagram illustrating a system for intelligent disaster and safety management interworking with artificial intelligence according to the exemplary embodiment of the present disclosure.

In FIG. 1, the system for intelligent disaster and safety management interworking with artificial intelligence is disclosed, wherein, through a single device, recognizing, alerting, reporting, and extinguishing a fire for a fire situation, or recognizing, alerting, reporting, and resolving a matter for an urgent situation (i.e., crime or emergency) are performed.

Referring to FIG. 1, the system for intelligent disaster and safety management interworking with artificial intelligence may include: a fire extinguishing part 100; an illumination part 110; a detector 120; a communication part 130; an output part 140; a power supply 150; and a controller 160.

The fire extinguishing part 100 may contain at least one fire extinguisher.

The fire extinguishers included in the fire extinguishing part 100 may be, for example, various fire extinguishers such as a reinforced liquid fire extinguisher, a powder fire extinguisher, or a gas type fire extinguisher. The type of the fire extinguishers is a type of bottle or a type of can, which are made of plastic or the like, and a plurality of fire extinguishers, including the reinforced liquid fire extinguishers, powder fire extinguishers, or gas type fire extinguishers, may be placed inside the fire extinguishing part 100. As for the number of installed fire extinguishers, one or the plurality of fire extinguishers may be installed in the fire extinguishing part 100, and the plurality of fire extinguishers may all have the same shape or may be different from each other. Each of the at least one fire extinguisher placed in the fire extinguishing part 100 may be managed in the system for intelligent disaster and safety management interworking with artificial intelligence.

A cover for protecting a fire extinguisher placed inside the fire extinguishing part 100 from external force may be provided, and the cover may have a structure in which the cover is removed, separated, or destroyed when the fire extinguisher is used.

Each fire extinguisher inside the fire extinguishing part 100 may be detected by the detector 120. The detector 120 may generate a warning by estimating use of a fire extinguisher or an occurrence of a fire situation due to the use of the fire extinguisher. In addition, the detector 120 may monitor damage or theft of a fire extinguisher by using generation of a signal during when there is no fire.

The illumination part 110 may be an illumination device of the system for intelligent disaster and safety management interworking with artificial intelligence itself, or may be an illumination device that is separable so as to be carried by a user. When the illumination part 110 is a portable illumination device, the illumination part 110 may have a structure in which the illumination part 110 is not connected to the system for intelligent disaster and safety management interworking with artificial intelligence by means of electrical signals but may be used independently. A tempered glass breaking tip is optionally installed inside the illumination part 110, so that when necessary to break glass, the glass may be broken by using the illumination part 110, thereby reducing the damage due to suffocation. The illumination part 110 may also be connected to the detector 120 to detect whether the illumination part 110 is separated or not, and detection signals may be transmitted to the controller 160.

The detector 120 may perform detection for a fire and detection for management of the system for intelligent disaster and safety management interworking with artificial intelligence. The detector 120 may have a camera function for the fire detection and perform heat detection and flame detection. In addition, the detector 120 may have additional options such as smoke detection and gas detection. As the detection for the management of the system for intelligent disaster and safety management interworking with artificial intelligence, the detector 120 may perform detection of fire extinguisher detachment, detection of cover opening, detection of user approach, detection of detachment of the illumination part 110, and the like.

The detection information generated by the detector 120 may be reprocessed and analyzed for simple or complex purposes, and may be used to predict a fire state or check a real-time state of the system for intelligent disaster and safety management interworking with artificial intelligence. For example, the detection information generated by the detector 120 may be used to determine whether a fire has occurred on the basis of artificial intelligence technology, and may generate a warning of fire detection or a warning for fire prevention.

In addition, the detector 120 may perform detection of a crime situation or an emergency situation as well.

In addition, the detector 120 may predict and notify a fire situation through detection of the opening of the cover or the use of at least one fire extinguisher. A detailed operation of the detector 120 will be described later.

The communication part 130 is based on WiFi technology, but depending on selection, the communication part 130 may be replaceable or may be redundantly usable with functions such as Ethernet, LTE, LoRa, Bluetooth, NFC, Zigbee, etc. The communication part 130 of the system for intelligent disaster and safety management interworking with artificial intelligence may communicate with an external control server so as to deliver disaster management information to a manager who performs tasks of controlling (a fire, a crime, or an emergency). In addition, by receiving control information (on the fire, crime, and emergency) from the control server, the operation of the system for intelligent disaster and safety management interworking with artificial intelligence may be controlled. Hereinafter, the disaster management information may be used in the meaning of including various information that is generated in the system for intelligent disaster and safety management interworking with artificial intelligence and transmitted to the outside. For example, the detection information may be included in the disaster management information. The control information may be used in the meaning of including information received from an external server (e.g., a control server).

In addition, a manager who manages the system for intelligent disaster and safety management interworking with artificial intelligence by using the information transmitted through the communication part 130 may manage the system for intelligent disaster and safety management interworking with artificial intelligence by using a mobile application. The manager may manage the system for intelligent disaster and safety management interworking with artificial intelligence on the basis of the mobile application on a manager's user device by using technologies such as NFC, RFID, WiFi, Bluetooth, LTE, NFC, etc. The manager may manage replacement, loss, refill, and the like of fire extinguishers through a management function, and may generate a usage history, replacement history, manager's inspection record, etc.

The output part 140 may be implemented to disseminate a current situation to the outside or to indicate a current state of the system for intelligent disaster and safety management interworking with artificial intelligence. For example, the output part 140 may use a flash and/or a siren to disseminate the current situation. Alternatively, the output part 140 may be implemented to operate for guidance by using a voice provided by the system, or selectively transmit a remote voice. The output part 140 may be utilized to serve as an illumination role of an interior element such as indirect illumination and landscape illumination, and may serve as a strobe flash for informing of a dangerous situation, or as an illumination device for notifying a position of the system for intelligent disaster and safety management interworking with artificial intelligence.

The power supply 150 may receive direct current power or alternating current power from the outside, and depending on a choice, may supply the power through various methods, in addition to power supply using PoE (power over Ethernet) technology, and the power supply using solar heat.

The controller 160 may be implemented to control operations of the fire extinguishing part 100, illumination part 110, detector 120, communication part 130, output part 140, and power supply 150.

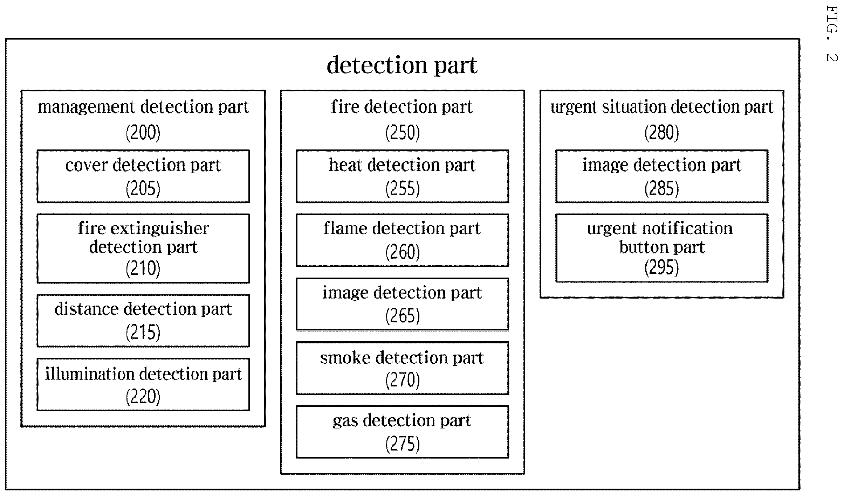

FIG. 2 is a conceptual diagram illustrating a detection operation of the detector of the system for intelligent disaster and safety management interworking with artificial intelligence according to the exemplary embodiment of the present disclosure.

In FIG. 2, a method for performing functions of fire detection, urgent situation detection, and management detection in the detector is disclosed.

Referring to FIG. 2, the detector may include a management detection part 200, a fire detection part 250, and an urgent situation detection part 280. The management detection part 200 may be implemented to perform detection for management of the system for intelligent disaster and safety management interworking with artificial intelligence, rather than direct detection of a fire. The fire detection part 250 may be implemented to directly detect the fire. The urgent situation detection part 280 may be implemented to detect an occurrence of a crime situation or an emergency situation.

Information generated by the management detection part 200, the fire detection part 250, and the urgent situation detection part 280 of the detector may be expressed in terms of detection information.

The management detection part 200 of the detector may include a cover detection part 205, a fire extinguisher detection part 210, a distance detection part 215, and an illumination detection part 220.

The cover detection part 205 may be implemented to check the removal and opening/dosing movement of the cover that is installed in order to protect the fire extinguishers and other accessories stored in the system for intelligent disaster and safety management interworking with artificial intelligence. The cover information detected by the cover detection part 205 may be transmitted, as the detection information, to the control server through the communication part. The cover information transmitted to the control server may be used to detect whether a fire has occurred.

The fire extinguisher detection part 210 may be implemented to determine whether a fire extinguisher itself is detached, determine leakage of a fire extinguisher solution and the like, and generate fire extinguisher information. The fire extinguisher information generated by the fire extinguisher detection part 210 may be transmitted to the control server as the detection information and used to detect whether a fire has occurred.

The distance detection part 215 may be used to measure a distance of an object (e.g., a person) approaching the system for intelligent disaster and safety management interworking with artificial intelligence and give an alarm to the object. For example, after detecting the distance from the object by the distance detection part 215, the approach may be notified through a sound or light of the output part, so as to give attention to object's safety when the object is approaching. The distance information generated by the distance detection part 215 may be transmitted to the control server as the detection information and used to detect whether a fire has occurred.

In addition, the distance detection part 215 may be used to prevent theft and secure evidence.

The illumination detection part 220 may be implemented to determine whether the illumination device itself is detached or not, and to generate illumination information. The illumination information generated by the illumination detection part 220 may be transmitted to the control server as the detection information and used to detect whether a fire has occurred.

The fire detection part 250 of the detector may include a heat detection part 255, a flame detection part 260, an image detection part 265, a smoke detection part 270, and a gas detection part 275.

The heat detection part 255 may be implemented to detect heat due to a fire. The heat information generated by the heat detection part 255 may be transmitted to the control server and used to detect whether a fire has occurred.

The flame detection part 260 may be implemented to detect a flame due to a fire. The flame information generated by the flame detection part 260 may be transmitted to the control server as the detection information and used to detect whether a fire has occurred.

The image detection part 265 may be implemented to detect an image due to a fire, and may be implemented to detect an urgent situation (i.e., crime or emergency). The image information generated by the image detection part 265 may be transmitted to the control server as the detection information and used to detect whether a fire has occurred.

The smoke detection part 270 may be implemented to detect smoke due to a fire. The smoke information generated by the smoke detection part 270 may be transmitted to the control server as the detection information and used to detect whether a fire has occurred.

The gas detection part 275 may be implemented to detect gas due to a fire. The gas information generated by the gas detection part 275 may be transmitted to the control server as the detection information and used to detect whether a fire has occurred.

The urgent situation detection part 280 may include an image detection part 285 and an urgent notification button part 295. A crime or an emergency situation is determined through analysis of the urgent notification button part and the image information, or as information collected from the urgent notification button part, the information is transmitted to the control server and may be used to detect whether an urgent situation has occurred.

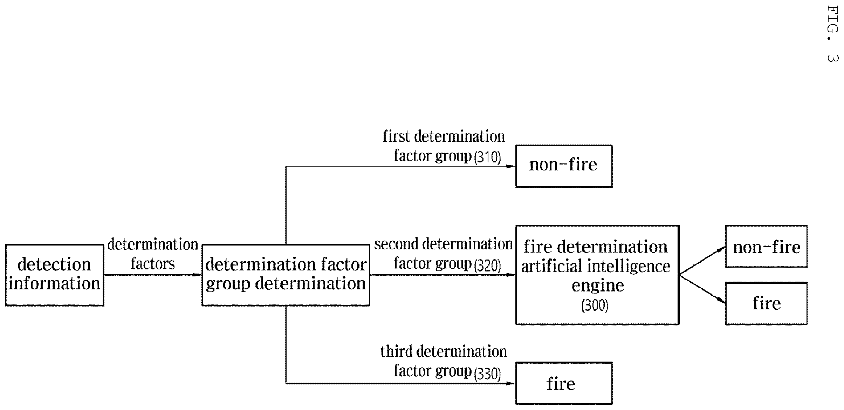

FIG. 3 is a conceptual diagram illustrating the detection operation, which is based on artificial intelligence, using the detection information according to the exemplary embodiment of the present disclosure.

In FIG. 3, a method of determining whether a fire has occurred by using artificial intelligence on the basis of the detection information generated by the detector is disclosed.

Referring to FIG. 3, the detection information generated by the detector may be analyzed on the basis of a fire determination artificial intelligence engine 300. A plurality of pieces of detection information is input to the learned fire determination artificial intelligence engine 300, and the fire determination artificial intelligence engine 300 may determine whether a fire has occurred on the basis of the plurality of pieces of detection information. The fire determination artificial intelligence engine 300 may be implemented in the system for intelligent disaster and safety management interworking with artificial intelligence itself, or may be implemented in a firefighting server, so as to input, as a determination factor, at least one piece of the detection information, thereby determining whether a fire has occurred.

The fire determination artificial intelligence engine 300 may determine whether or not a fire has occurred on the basis of entire detection information, but may determine whether a fire has occurred on the basis of preprocessed detection information that is preprocessed for some pieces of the detection information, rather than the entire detection information. The determined result may be transmitted to a manager.

When a value of a single sensor is significantly high such as to be greater than or equal to a set threshold when preprocessing the detection information, a relatively high weight is given, and when a plurality of sensors detects a fire at the same time, a relatively high weight may be given as well. Through such preprocessing, a cumulative pattern, a frequency pattern, and a variation pattern, which will be described later, may be generated.

In addition, through a feedback function after the determining of a fire on the basis of the learned fire determination artificial intelligence engine 300, when it is determined that a fire has not occurred, the determination result information is fed back so that a more accurate determination may be made afterward through re-learning of the corresponding situation, whereby the re-learning for the fire determination artificial intelligence engine 300 may be performed.

Determination factors for determining whether a fire has occurred may be determined on the basis of the detected information, and the determination of whether a fire has occurred may be performed on the basis of the determination factors through fire determination based on the fire determination artificial intelligence (AI) engine 300.

Below is a table showing the determination factors for determining whether a fire has occurred.

**[Table 1]**

| Case | Measured temperature | Smoke | Flame | Fire or not |
|---|---|---|---|---|
| 1 | Normal | Not detected | Not detected | No Fire |
| 2 | Over temperature | Not detected | Not detected | AI determination |
| 3 | Normal | Not detected | Not detected | AI determination |
| 4 | Over temperature | Not detected | Not detected | AI determination |
| 5 | Normal | Not detected | Not detected | AI determination |
| 6 | Over temperature | Not detected | Not detected | AI determination |
| 7 | Normal | Not detected | Not detected | AI determination |
| 8 | Over temperature | Not detected | Not detected | AI determination |
| 9 | Normal | Detected | Not detected | AI determination |
| 10 | Over temperature | Detected | Not detected | AI determination |
| 11 | Normal | Detected | Not detected | AI determination |
| 12 | Over temperature | Detected | Not detected | AI determination |
| 13 | Normal | Detected | Not detected | AI determination |
| 14 | Over temperature | Detected | Not detected | AI determination |
| 15 | Normal | Detected | Not detected | AI determination |
| 16 | Over temperature | Detected | Not detected | AI determination |
| 17 | Normal | Not detected | Detected | AI determination |
| 18 | Over temperature | Not detected | Detected | AI determination |
| 19 | Normal | Not detected | Detected | AI determination |
| 20 | Over temperature | Not detected | Detected | AI determination |
| 21 | Normal | Not detected | Detected | AI determination |
| 22 | Over temperature | Not detected | Detected | AI determination |
| 23 | Normal | Not detected | Detected | AI determination |
| 24 | Over temperature | Not detected | Detected | AI determination |
| 25 | Normal | Detected | Detected | AI determination |
| 26 | Over temperature | Detected | Detected | AI determination |
| 27 | Normal | Detected | Detected | AI determination |
| 28 | Over temperature | Detected | Detected | AI determination |
| 29 | Normal | Detected | Detected | AI determination |
| 30 | Over temperature | Detected | Detected | AI determination |
| 31 | Normal | Detected | Detected | AI determination |
| 32 | Over temperature | Detected | Detected | Fire |

Table 1 is an example of one determination method, and cases in which measured temperature, smoke, and flame are used as determination factors are exemplarily disclosed.

The determination factors are divided into three groups according to the values thereof, wherein a first determination factor group 310 determines that a fire has not occurred, a second determination factor group 320 performs, by using AI, the determination of whether a fire has occurred, and a third determination factor group 330 may be a group that does not use AI and determines that a fire has occurred.

The first determination factor group 310, the second determination factor group 320, and the third determination factor group 330 may be adaptively adjusted on the basis of the determination results of the fire determination artificial intelligence engine 300 on whether or not a fire has occurred. When the fire determination artificial intelligence engine 300 determines whether or not a fire has occurred on the basis of a value greater than or equal to threshold reliability, the cases included in the second determination factor group 320 may be changed to the first determination factor group 310 or the third determination factor group 330.

Hereinafter, in the exemplary embodiment of the present disclosure, a method for determining, through AI determination, whether a fire has occurred is disclosed.

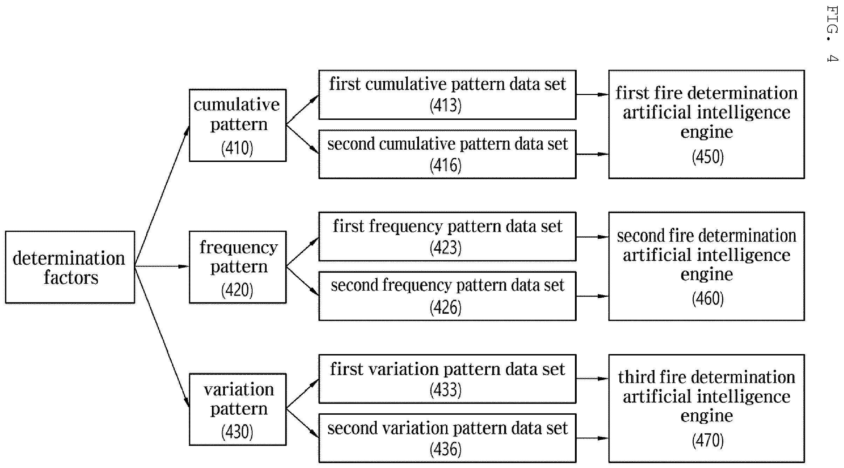

FIG. 4 is a conceptual diagram illustrating a fire detection method according to the exemplary embodiment of the present disclosure.

In FIG. 4, a method of determining whether a fire has occurred on the basis of different AI engines by patterning determination factors for the fire detection is disclosed.

Referring to FIG. 4, in the present disclosure, the determination of whether a fire has occurred may be performed on the basis of a cumulative pattern 410 for the determination factors, a frequency pattern 420 for the determination factors, and a variation pattern 430 for the determination factors.

The cumulative pattern 410 may be information obtained by patterning each value of a plurality of determination factors. For example, the determination factors such as a measured temperature value, a smoke value, a flame value, and the like may be continuously input, and the input determination factors may be patterned. For example, a temperature value measured at 25 degrees, a smoke value (e.g., no smoke, 0), and a flame value (e.g., no flame, 0) are quantified as a value (25, 0, 0), and in this way, each value of the quantified determination factors may be continuously input on a spatial coordinate axis, so as to form one pattern as a cumulative pattern 410 on the spatial coordinate axis. Alternatively, one pattern may be formed as a cumulative pattern by continuously arranging the coordinate planes of time-temperature of a first day, time-temperature of a second day, or time-temperature of more days on the spatial coordinate axis.

Information on a first cumulative pattern data set 413 for a cumulative pattern 410 obtained when a fire has occurred and a second cumulative pattern data set 416 for a cumulative pattern 410 obtained when a fire has not occurred may be input to a first fire determination artificial intelligence engine 450. The first fire determination artificial intelligence engine 450 may be trained on the basis of the first cumulative pattern data set 413 and the second cumulative pattern data set 416.

The learned first fire determination artificial intelligence engine 450 may determine whether a fire has occurred on the basis of the cumulative pattern 410. Specifically, the determination factors are changed to the cumulative pattern 410, and the learned first fire determination artificial intelligence engine 450 receiving the cumulative pattern 410 may determine whether a fire has occurred on the basis of the input cumulative pattern 410.

The frequency pattern 420 may be information patterned by transforming each value of the plurality of determination factors into a frequency plane. The frequency pattern 420 may be generated by transforming the above-described cumulative pattern 410 into the frequency plane on the basis of a Fourier transform.

Information on a first frequency pattern data set 423 for the frequency pattern 420 obtained when a fire has occurred and a second frequency pattern data set 426 for the frequency pattern 420 obtained when a fire has not occurred may be input to a second fire determination artificial intelligence engine 460. The second fire determination artificial intelligence engine 460 may be trained on the basis of the first frequency pattern data set 423 and the second frequency pattern data set 426.

The learned second fire determination artificial intelligence engine 460 may determine whether a fire has occurred on the basis of the frequency pattern. Specifically, the determination factors are changed to the frequency pattern 420, and the learned second fire determination artificial intelligence engine 460 receiving the frequency pattern 420 may determine whether or not a fire has occurred on the basis of the input frequency pattern.

The variation pattern 430 may be information obtained by patterning changes of each of the plurality of determination factors. For example, the determination factors such as a measured temperature value, a changed temperature value, a smoke value, a flame value, and the like may be continuously input, and variation of the input values may be extracted and patterned. For example, in the primarily input values of the determination factors, a temperature value measured at 25 degrees, a smoke value (e.g., no smoke, 0), and a flame value (e.g., no flame, 0) are quantified as a value (25, 0, 0), and after that, in the primarily input values of the determination factors, a temperature value measured at 27 degrees, a smoke value (i.e., smoke, 1), and a flame value (i.e., flame, 1) may be quantified as a value (27, 1, 1). In this way, quantified values may be continuously input to form one pattern on the coordinate axis.

Information on a first variation pattern data set 433 for the variation pattern 430 obtained when a fire has occurred and a second variation pattern data set 436 for the variation pattern obtained when a fire has not occurred may be input to a third fire determination artificial intelligence engine 470. The third fire determination artificial intelligence engine 470 may be trained on the basis of the first variation pattern data set 433 and the second variation pattern data set 436.

The learned third fire determination artificial intelligence engine 470 may determine whether a fire has occurred on the basis of the variation pattern 430. Specifically, the determination factors are changed to the variation pattern 430, and the learned third fire determination artificial intelligence engine 470 receiving the variation pattern 430 may determine whether or not a fire has occurred on the basis of the input variation pattern.

For the second determination factor group, determination results of the first fire determination artificial intelligence engine 450, the second fire determination artificial intelligence engine 460, and the third fire determination artificial intelligence engine 470 are synthesized, so that whether a fire has occurred may be determined.

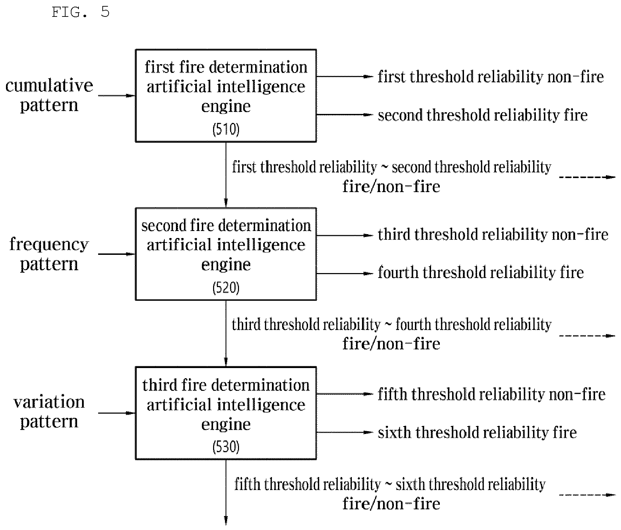

FIG. 5 is a conceptual diagram illustrating a method of determining whether a fire has occurred on the basis of determination results of the fire determination artificial intelligence engines according to the exemplary embodiment of the present disclosure.

Referring to FIG. 5, after the determination factors are input, it may be determined whether the determination factors are included in any determination factor group.

The determination factors may be determined as one of the first determination factor group, the second determination factor group, or the third determination factor group.

When the input determination factors belong to the first determination factor group or the third determination factor group, it may be determined whether a fire has occurred without a separate AI-based determination.

When the determination factors belong to the first determination factor group, the control server may determine that a fire has not occurred. When the determination factors belong to the third determination factor group, the control server may determine that a fire has occurred.

When the determination factors belong to the second determination factor group, the firefighting server may determine whether a fire has occurred on the basis of the AI-based determination.

The first fire determination artificial intelligence engine, the second fire determination artificial intelligence engine, and the third fire determination artificial intelligence engine may determine whether a fire has occurred on the basis of a sequential determination model or a parallel determination model. The determination result of the sequential determination model and the determination result of the parallel determination model may be comprehensively utilized, and when at least one model determined that a fire has occurred, it may be determined that there is a possibility of the fire.

In FIG. 5, the sequential determination model is first disclosed.

The sequential determination model may determine whether a fire has occurred through determination in sequence on the first fire determination artificial intelligence engine 510, the second fire determination artificial intelligence engine, and the third fire determination artificial intelligence engine.

### A. Sequential Determination Model

### 1) The First Fire Determination Artificial Intelligence Engine 510

Primary determination may be performed by transforming the determination factors into a cumulative pattern through the first fire determination artificial intelligence engine 510.
a. As a result of the primary determination of the first fire determination artificial intelligence engine 510, when it is determined that a fire has not occurred with a value greater than or equal to first threshold reliability, it may be determined that a fire has not occurred without performing additional determination.
b. As the result of the primary determination of the first fire determination artificial intelligence engine 510, when it is determined that a fire has not occurred on the basis of a value greater than the first threshold reliability or it is determined that a fire has occurred on the basis of a value less than second threshold reliability, the additional determination as to whether or not a fire has occurred may be performed on the basis of the second fire determination artificial intelligence engine 520.
c. As the result of the primary determination of the first fire determination artificial intelligence engine 510, when it is determined that a fire has occurred on the basis of a value greater than or equal to the second threshold reliability, it may be determined that a fire has occurred without performing of the additional determination.

### 2) Second Fire Determination Artificial Intelligence Engine 520

The secondary determination may be performed by transforming the determination factors into a frequency pattern through the second fire determination artificial intelligence engine 520.
a. As a result of the secondary determination of the second fire determination artificial intelligence engine 520, when it is determined that a fire has not occurred on the basis of a value greater than or equal to third threshold reliability, it may be determined that a fire has not occurred without performing of the additional determination.
b. As the result of the secondary determination of the second fire determination artificial intelligence engine 520, when it is determined that a fire has not occurred on the basis of a value greater than the third threshold reliability or it is determined that a fire has occurred on the basis of a value less than fourth threshold reliability, the additional determination as to whether or not a fire has occurred may be performed on the basis of the third fire determination artificial intelligence engine 530.
c. As the result of the secondary determination of the second fire determination artificial intelligence engine 520, when it is determined that a fire has occurred on the basis of a value greater than or equal to the fourth threshold reliability, it may be determined that a fire has occurred without performing of the additional determination.

### 3) Third Fire Determination Artificial Intelligence Engine 530

Tertiary determination may be performed by transforming the determination factors into a variation pattern through the third fire determination artificial intelligence engine 530.
a. As a result of the tertiary determination of the third fire determination artificial intelligence engine 530, when it is determined that a fire has not occurred on the basis of a value greater than or equal to fifth threshold reliability, it may be determined that a fire has not occurred without performing of the additional determination.
b. As the result of the tertiary determination of the third fire determination artificial intelligence engine 530, in a case where it is determined that a fire has not occurred on the basis of a value greater than the fifth threshold reliability or it is determined that a fire has occurred on the basis of a value less than sixth threshold reliability, when at least one of a determination result of the first fire determination artificial intelligence engine 510, a determination result of the second fire determination artificial intelligence 520, and a determination result of the third fire determination artificial intelligence 530 indicates that a fire has occurred, finally it may be determined that a fire has occurred.
c. As the result of the tertiary determination of the third fire determination artificial intelligence engine 530, when it is determined that a fire has occurred on the basis of a value greater than or equal to the sixth threshold reliability, it may be determined that a fire has occurred without performing of the additional determination.

The first threshold reliability and the second threshold reliability for the determination of the first fire determination artificial intelligence engine 510, the third threshold reliability and the fourth threshold reliability for the determination of the second fire determination artificial intelligence engine 520, and the fifth threshold reliability and the sixth threshold reliability for the determination of the third fire determination artificial intelligence engine 530 may be adjusted in consideration of the final determination of whether a fire has occurred.

In addition, in the present disclosure, for the accurate determination in sequence, as moving toward the first threshold reliability, the third threshold reliability, and the fifth threshold reliability, the relatively large values may be respectively set to the first, third, and fifth threshold reliability, which are for determining that a fire has not occurred. Conversely, in the case of the values for determining that a fire has occurred, fixed values may be set so as to determine that a fire has occurred on the basis of the same reliability. That is, the second threshold reliability, the fourth threshold reliability, and the sixth threshold reliability for determining that a fire has occurred may be respectively set to the fixed values.

The sequential determination method of FIG. 5 may be used as a method of determining the urgent situation as well as the fire detection, and the method of determining the urgent situation may implement a function by adding or modifying the function.

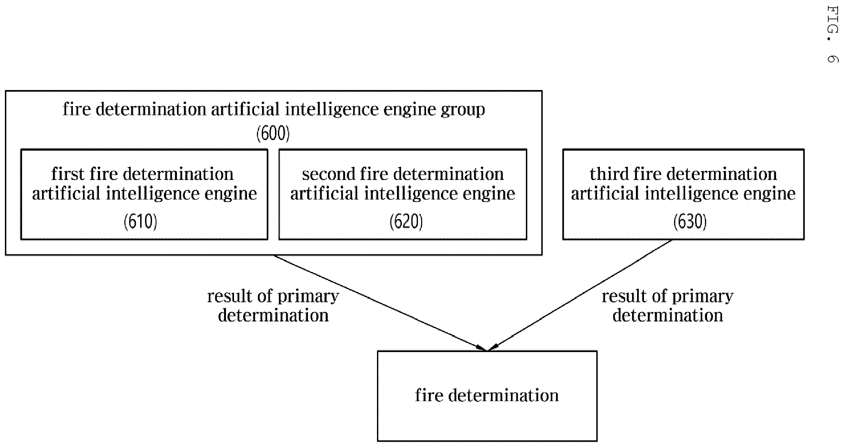

FIG. 6 is a conceptual diagram illustrating a method of determining whether a fire has occurred on the basis of the determination results of the fire determination artificial intelligence engines according to the exemplary embodiment of the present disclosure.

In FIG. 6, a method of determining whether a fire has occurred on the basis of a result of the parallel fire determination artificial intelligence engine is disclosed.

Referring to FIG. 6, the first fire determination artificial intelligence engine 610 and the second fire determination artificial intelligence engine 620 are set as one fire determination artificial intelligence engine group 600, and the third fire determination artificial intelligence engine 630 may independently determine whether or not a fire has occurred.

As having the same underlying data, the first fire determination artificial intelligence engine 610 and the second fire determination artificial intelligence engine 620 may be grouped into one group to perform the determination.

As a result of the determination of the first fire determination artificial intelligence engine 610 and the second fire determination artificial intelligence engine 620, when the at least one fire determination artificial intelligence engine determines that a fire has occurred on the basis of the determination factors, the fire determination artificial intelligence engine group 600 may determine that a fire has occurred on the basis of the determination factors. The first fire determination artificial intelligence engine 610 and the second fire determination artificial intelligence engine 620 may be set to have the same value of group determination reliability, so as to determine whether a fire has occurred on the basis of the determination factors.

The third fire determination artificial intelligence engine 630 may operate independently to determine whether a fire has occurred on the basis of a separate value of determination reliability.

In the results of the primary determination of the fire determination artificial intelligence engine group 600, when one of the results of the secondary determination of the third fire determination artificial intelligence engine is determined that a fire has occurred, it may be finally determined that a fire has occurred.

In addition, the method of FIG. 6 may be used as the method of determining the urgent situation as well as the fire detection, and the method of determining the urgent situation may implement a function by adding or modifying the function.

The exemplary embodiment according to the present disclosure described above may be implemented in the form of program instructions that may be executed through various computer components and recorded in a computer-readable recording medium. The computer-readable recording medium may include: program instructions, data files, data structures, and the like individually or in combination. The program instructions recorded on the computer-readable recording medium may be specially designed and configured for the embodiment of the present disclosure, or may be known and available to those skilled in the art of computer software. Examples of the computer-readable recording media include: magnetic media such as hard disks, floppy disks, and magnetic tapes; optical media such as CD-ROMs and DVDs; magneto-optical media such as floptical disks; and a hardware device specially configured to store and execute program instructions, the hardware device including such as ROM, RAM, flash memory, etc. Examples of program instructions include not only machine language codes such as those generated by a compiler, but also high-level language codes that may be executed by a computer using an interpreter or the like. The hardware device may be converted into one or more software modules to perform processing in accordance with the present disclosure, and vice versa. Hardware may exist either locally or in the cloud, and is not limited to a location and form thereof.

As described above, the present disclosure has been described by specific matters such as specific components and limited exemplary embodiments and drawings. However, since these descriptions are only provided to help a more general understanding of the present disclosure, the present disclosure is not limited to the above exemplary embodiments, and those skilled in the art to which the present disclosure belongs can make various modifications and variations from these descriptions.

Therefore, the spirit of the present disclosure should not be limited to the described exemplary embodiments, and all things equal or equivalent to the claims as well as the claims to be described later fall within the scope of the concept of the present disclosure.

## Claims

1. A method for intelligent disaster and safety management interworking with artificial intelligence, the method comprising:
generating, by a detector, a plurality of pieces of detection information;
transmitting, by a communication part, the plurality of pieces of detection information as disaster management information to a control server;
receiving, by the communication part, control information from the control server; and
controlling, by a controller, an output part according to whether a fire has occurred or whether an urgent situation has occurred on the basis of the control information.

2. The method of claim 1, wherein the detector comprises a management detection part, a fire detection part, and an urgent situation detection part,
the management detection part comprises a cover detection part, a solution detection part, and a distance detection part or an illumination detection part,
the fire detection part comprises a heat detection part, a flame detection part, an image detection part, a smoke detection part, and a gas detection part, and
the urgent situation detection part comprises an image detection part and an urgent notification button part.

3. The method of claim 2, wherein at least one piece of the detection information among the plurality of pieces of detection information is set as a determination factor for determining whether a fire has occurred,
the determination factor is classified into one of a first determination factor group, a second determination factor group, and a third determination factor group,
the first determination factor group comprises the determination factor for determining that a fire has not occurred,
the second determination factor group comprises the determination factor for determining whether a fire has occurred on the basis of a fire determination artificial intelligence engine, and
the third determination factor group comprises the determination factor for determining that a fire has occurred.

4. A system for intelligent disaster and safety management interworking with artificial intelligence, the system comprising:
a detector configured to generate a plurality of pieces of detection information;
a communication part configured to transmit the plurality of pieces of detection information as disaster management information to a control server and receive control information from the control server; and
a controller configured to control an output part according to whether a fire has occurred or an urgent situation has occurred on the basis of the control information.

5. The system of claim 4, wherein the detector comprises a management detection part, a fire detection part, and an urgent situation detection part,
the management detection part comprises a cover detection part, a solution detection part, and a distance detection part or an illumination detection part,
the fire detection part comprises a heat detection part, a flame detection part, an image detection part, a smoke detection part, and a gas detection part, and
the urgent situation detection part comprises an image detection part and an urgent notification button part.

6. The system of claim 5, wherein at least one piece of the detection information among the plurality of pieces of detection information is set as a determination factor for determining whether a fire has occurred,
the determination factor is classified into one of a first determination factor group, a second determination factor group, and a third determination factor group,
the first determination factor group comprises the determination factor for determining that a fire has not occurred,
the second determination factor group comprises the determination factor for determining whether a fire has occurred on the basis of a fire determination artificial intelligence engine, and
the third determination factor group comprises the determination factor for determining that a fire has occurred.
